# EUROPÄISCHE PATENTANMELDUNG

(11) **EP 1 683 744 A1**
(43) Veröffentlichungstag der Anmeldung: **26.07.2006**
(21) Anmeldenummer: 05028250.8
(22) Anmeldetag: 22.12.2005
(51) Int. Cl.: B65F 1/10, G01G 19/40, G01G 21/28

(54) **Wiegeschleuse**

(30) Priorität: 23.12.2004 DE 202004020144 U
(71) Anmelder: Hubanlagen-Wiegetechnik-Kippsystem Vertriebs-GmbH, 59872 Meschede (DE)
(72) Erfinder: Hutsch, Werner, 59872 Meschede (DE)

(57) **Zusammenfassung**

Wiegeschleuse zum Wiegen von in die Wiegeschleuse eingefüllten Gütern, insbesondere für Abfallsammelvorrichtungen, mit einem Gehäuse (1), das eine Einfüllöffnung und eine Auswurföffnung aufweist, einem ersten Deckel (2a), mit dem die Einfüllöffnung verschließbar ist, und Wiegemittein (3,4), mit denen die einfüllbaren Güter gewogen werden können, wobei die Wiegeschleuse einen zweiten Deckel (2b) umfasst, mit welchem die Auswurföffnung verschließbar ist, wobei der erste Deckel (2a) und der zweite Deckel (2b) fest miteinander verbunden sind und eine Deckeleinheit (2) bilden, die schwenkbar zu dem Gehäuse (1) ist, und dass die Wiegemittel (3,4) an einer Innenseite der Deckeleinheit (2) an derselben angebracht sind.

## Beschreibung

Die Erfindung betrifft eine Wiegeschleuse zum Wiegen von in die Wiegeschleuse eingefüllten Gütern, insbesondere für Abfallsammelvorrichtungen, mit einem Gehäuse, das eine Einlassöffnung und eine Auslassöffnung hat, einem ersten Deckel, mit welchem die Einfüllöffnung verschließbar ist und Wiegemitteln, mit denen die einfüllbaren Güter gewogen werden können.

Aus der Druckschrift mit der Veröffentlichungsnummer DE 41 22 405 A1 ist eine solche Wiegeschleuse bekannt. Die in dieser Druckschrift offenbarte Wiegeschleuse weist ein inneres und ein äußeres Gehäuse auf. Das äußere Gehäuse ist im Wesentlichen zylindrisch ausgeführt und mit dem Deckel verschließbar. Das innere Gehäuse ist in dem äußeren Gehäuse verschwenkbar angeordnet. In einer Einfüllstellung des inneren Gehäuses kann Abfall durch den geöffneten Deckel des äußeren Gehäuses in das innere Gehäuse eingefüllt werden. Ist der Deckel verschlossen, ist ein Wiegen des Abfalls mit den Wiegemitteln möglich. Ist die Wiegung abgeschlossen, wird das innere Gehäuse verschwenkt, bis der Abfall über eine Auswurföffnung in eine Mülltonne unter der Wiegeschleuse fallen kann.

An der in der Druckschrift dargestellten Wiegeschleuse sind somit zwei Handgriffe notwendig, damit eine Wiegung ordnungsgemäß durchgeführt und der Abfall in die Mülltonne verbracht werden kann. Zum einen muss der Deckel geöffnet und geschlossen werden. Zum anderen muss der innere Behälter verschwenkt werden. Außerdem sind zwei schwenkbare Teile, nämlich der Deckel und der innere Behälter notwendig. Die Wiegeschleuse ist dadurch zum einen aufwändig in der Konstruktion und Herstellung, zum anderen umständlich in der Bedienung.

Hier setzt vorliegende Erfindung an.

Der vorliegenden Erfindung liegt die Aufgabe zugrunde, eine Wiegeschleuse vorzuschlagen, die einfacher bedient werden kann als die bekannten Wiegeschleusen und die darüber hinaus auch einfacher in der Konstruktion ist.

Diese Aufgabe wird erfindungsgemäß dadurch gelöst, dass die Wiegeschleuse einen zweiten Deckel umfasst, mit welchem die Auswurföffnung verschließbar ist, wobei der erste Deckel und der zweite Deckel fest miteinander verbunden sind und eine Deckeleinheit bilden, die schwenkbar zu dem Gehäuse ist und dass die Wiegemittel an einer Innenseite der Deckeleinheit an derselben angebracht sind. Bei der Erfindung sind somit gewissermaßen der Deckel und der innere Behälter aus der aus dem Stand der Technik bekannten Wiegeschleuse zu einer Einheit verschmolzen. Die Wiegeschleuse ist einfach in der Bedienung und die Wiegeschleuse ist insgesamt einfacher konstruiert.

Gemäß der Erfindung können die Innenseiten der Deckeleinheit einen Zylindersektor begrenzen, in den die Güter, insbesondere Abfall eingefüllt werden kann.

Die Wiegemittel können vorzugsweise an dem zweiten Deckel angebracht sein. Die Wiegemittel umfassen eine oder mehrere Wiegezellen. Die Wiegemittel können darüber hinaus zumindest eine Wiegeplatte umfassen. Die Wiegezellen sind zum Teil zwischen zumindest einer der Wiegeplatten und der Deckeleinheit angeordnet.

Die Deckeleinheit kann in eine Einfüllstellung verschwenkbar sein, in der die Einfüllöffnung freigegeben und die Auswurföffnung durch den zweiten Deckel verschlossen ist. Die Deckeleinheit kann ferner in eine Wiegestellung verschwenkbar sein, in welcher die eingefüllten Güter abwiegbar sind und die Einfüllöffnung durch den ersten Deckel oder ein Teil der Wiegeplatten verschlossen ist. Die Deckeleinheit kann ferner in einer Auswurfstellung verschwenkt werden, in welcher die Einfüllöffnung verschlossen ist, um die Wiegeschleuse zu entleeren.

Die Stellung der Deckeleinheit ist in der Wiegestellung vorzugsweise mit einem Verriegelungselement verriegelbar. Das Verriegelungselement kann einen Bolzen umfassen, der vorzugsweise von einem Elektromagneten angetrieben wird.

Die Wiegeschleuse kann ferner einen Sensor umfassen, der die Wiegestellung der Deckeleinheit erkennt und dann die Verriegelung der Deckeleinheit in der Wiegestellung auslösen kann.

Die Wiegeschleuse umfasst vorzugsweise einen Wiegerechner (Rechner), der mit den Wiegemitteln über eine Serie der Schnittstelle oder einen Bus verbunden ist. Die Wiegeschleuse kann zumindest ein Anzeigemittel umfassen, das mit dem Rechner verbunden ist, und auf welchen verschiedene Nutzerdaten, Messdaten oder Anweisungen an den Benutzer angezeigt werden können. Der Sensor zur Erkennung der Wiegestellung ist zumindest mittelbar mit dem Wiegerechner verbunden.

Die Wiegeschleuse kann ferner Kommunikationsmittel zur Übertragung von Wiegedaten und anderen Informationen aufweisen. Die Kommunikationsmittel können dabei Mobilfunkendgeräte oder Teile davon sein.

Ein Ausführungsbeispiel für eine erfindungsgemäße Wiegeschleuse ist anhand der Zeichnungen näher beschrieben. Es zeigt
- Fig. 1: eine Seitenansicht der erfindungsgemäßen Wiegeschleuse aufgesetzt auf einen Behälter bei abgenommenen Seitenwänden,
- Fig. 2: eine Frontansicht der Wiegeschleuse,
- Fig. 3a bis Fig. 3c: eine Seitenansicht entsprechend der Fig. 1 in verschiedenen Zuständen der Wiegeschleuse.

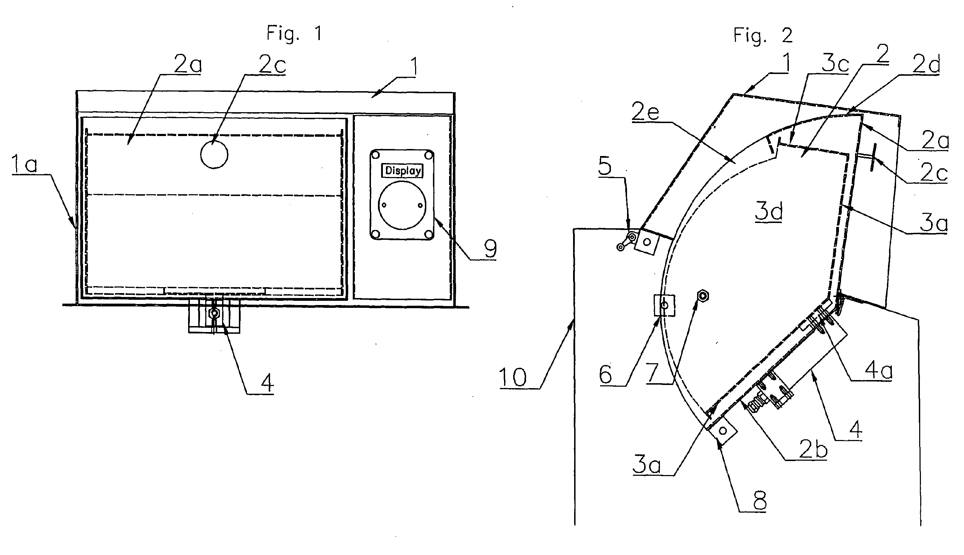

Die in den Figuren dargestellte Wiegeschleuse weist ein Gehäuse 1 auf. Dieses Gehäuse 1 weist Seitenwände auf, die durch unregelmäßige Vierecke gebildet sind. Eine Rückwand und eine Oberseite des Gehäuses werden dagegen durch rechteckige Flächenelemente gebildet. Auf der Vorderseite (siehe Fig. 2) ist eine in etwa rechteckige Einfüllöffnung vorgesehen, an die sich seitlich eine Fläche anschließt, in die eine Bedien- und Anzeigetafel 9 eingelassen ist.

In das Gehäuse 1 ist eine Deckeleinheit 2 schwenkbar eingesetzt. Diese Deckeleinheit 2 umfasst einen ersten Deckel 2a und einen zweiten Deckel 2b. Der erste Deckel 2a und der zweite Deckel 2b sind im Wesentlichen rechteckig und entlang einer Kante in einem festen Winkel zueinander miteinander verbunden. Um diese Kanten ist die Deckeleinheit 2 verschwenkbar an dem Gehäuse 1 gelagert. Der erste Deckel 2a und der zweite Deckel 2b sind seitlich über Seitenwände 2e in Form von Kreissektoren miteinander verbunden. Die Seitenwände 2e, der erste Deckel 2a und der zweite Deckel 2b schließen einen im Wesentlichen zylindersektorförmigen Raum ein. Die Deckeleinheit 2 kann in dem Gehäuse 1 verschwenkt werden, um in verschiedene Stellungen gebracht zu werden, die für die Benutzung der Wiegeschleuse von Bedeutung sind.

An der Deckeleinheit 2 sind verschwenkbar mit der Deckeleinheit 2 Wiegemittel 3, 4 angebracht. Diese Wiegemittel umfassen zunächst eine Halterung 4 für eine Wiegezelle 4a. Die Wiegezelle 4a ist auf der Innenseite des zweiten Deckels 2b angebracht. An der Wiegezelle ist eine Wiegeplatte 3b befestigt. Die Wiegeplatte 3b liegt parallel zu dem zweiten Deckel. Die Wiegezelle 4a ist so eingestellt, dass in einer waagerechten Position des zweiten Deckels auf der Wiegeplatte 3b befindliche Masse ordnungsgemäß gewogen wird. An die Wiegeplatte 3b schließt sich eine weitere Wiegeplatte 3a an, die parallel zu dem ersten Deckel 2a ist. Die weitere Wiegeplatte 3a und der erste Deckel 2a sind jedoch nicht miteinander verbunden und beabstandet voneinander. Die weitere Wiegeplatte 3a ist vielmehr fest mit der ersten Wiegeplatte 3b unmittelbar und auch über Seitenwände 3d verbunden. Die weitere Wiegeplatte 3a ist an ihrer von der ersten Wiegeplatte 3b abgewandten Kante um 90° abgewinkelt, wodurch ein Begrenzungselement 3c gebildet wird.

Das Gehäuse 1 ist mit der übrigen Wiegeschleuse auf einen Behälter 10 aufgesetzt, der Teil einer Abfallsammelvorrichtung ist. In den Behälter kann eine Mülltonne eingestellt werden, die über die Wiegeschleuse mit Abfall befüllt werden kann. Der Abfall wird dabei gewogen und die Masse des Abfalls erfasst. Dazu meldet die Wiegezelle 4a die erfasste Masse an einen Wiegerechner (nicht dargestellt) und das Ergebnis der Wägung kann in der Anzeige in der Tafel 9 dargestellt werden.

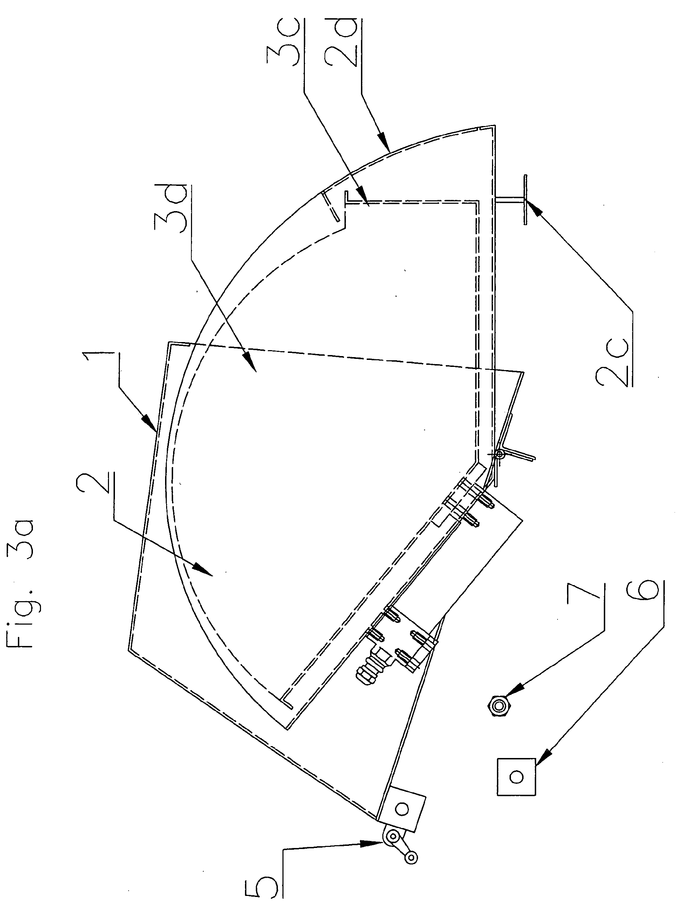

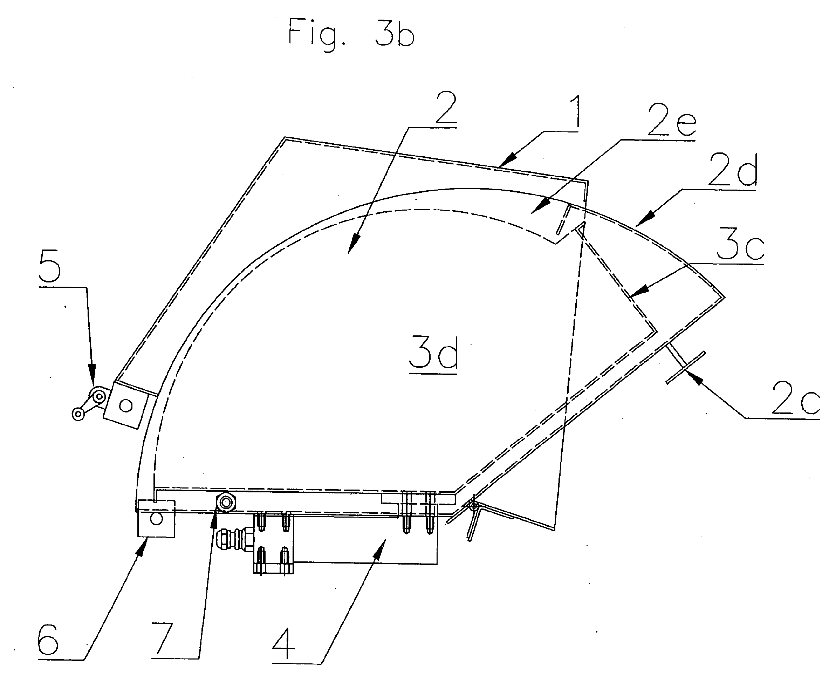

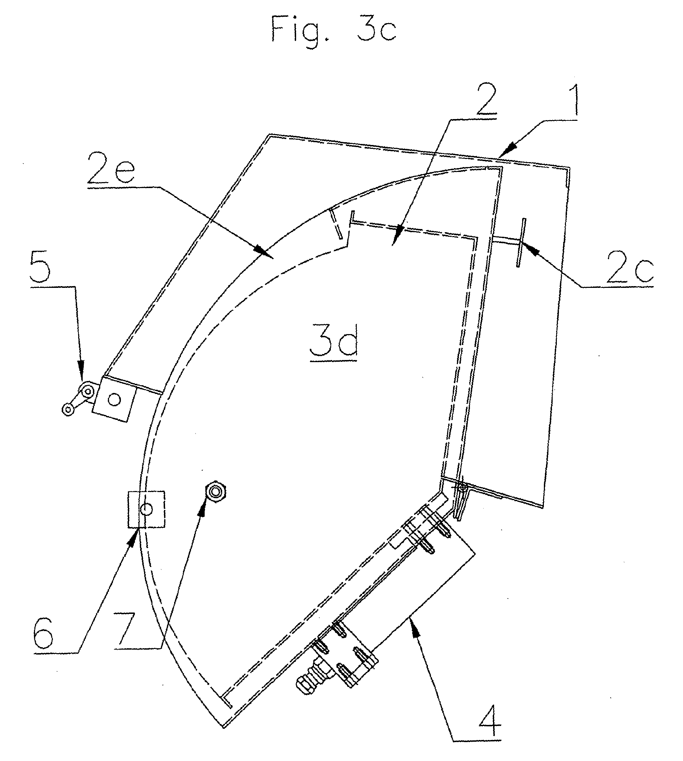

In der Fig. 1 und der Fig. 2 ist die Wiegeschleuse in einer Ruhestellung oder Neutralstellung dargestellt. Sofern die Wiegeschleuse benutzt wird, nimmt sie eine der in den Fig. 3a bis 3c dargestellten Zustände ein. In der Fig. 3a ist eine Einfüllstellung der Deckeleinheit 2 dargestellt. In Fig. 3b ist eine Wiegestellung dargestellt, während in Fig. 3c eine Auswurfstellung dargestellt ist.

Damit Abfall in die Wiegeschleuse eingebracht werden kann, muss das Deckelement 2 aus der Ruhestellung, wie sie in Fig. 1 dargestellt ist, in die Einfüllstellung verbracht werden. In der Ruhestellung ist die Wiegeschleuse gegen eine Benutzung gesichert. Ein Benutzer, der die Wiegeschleuse benutzen will, muss sich zunächst dem Wiegerechner mittels eines Schlüssels identifizieren lassen. Erst wenn die Wiegeschleuse nach erfolgter Identifizierung und Autorisierung zur Benutzung freigegeben wird, kann der Benutzer die Deckeleinheit 2 mittels eines Handgriffs 2a in die Einfüllstellung verschwenken. In der Einfüllstellung kann dann Müll in die Deckeleinheit 2 eingefüllt werden. Der Benutzer wird den Müll dazu im Wesentlichen auf die weitere Wiegeplatte 3a legen. Seitlich wird der Müll dann von den Seitenwänden 3d, dem Begrenzungselement 3c und der ersten Wiegeplatte 3a gehalten. Hat der Benutzer seinen Müll eingefüllt, kann die Deckeleinheit 2 in die Wiegestellung verschwenkt werden.

Die Wiegestellung, wie sie in Fig. 3 b dargestellt ist, ist durch eine waagerechte erste Wiegeplatte 3a gekennzeichnet. Hat die erste Wiegeplatte 3a und damit verbunden der zweite Deckel 2b eine waagerechte Stellung erreicht, wird dies von einem Sensor 6 erkannt, der daraufhin mittels eines als Bolzen 7 ausgeführten Verriegelungselements die Deckeleinheit 2 in der Wiegestellung verriegelt. Nun wird eine Wiegung durchgeführt. Die Wiegezellen 4a teilen dem Wiegerechner das Gewicht mit, der die Nummer der Wiegung und die erfasst Masse vorzugsweise mit der Uhrzeit abspeichert. Nach der Speicherung wird das Verriegelungselement 7 gelöst und die Deckeleinheit 2 kann entweder erneut in die Füllstellung verschwenkt werden, um Abfall aus der Deckeleinheit 2 zu entnehmen oder weiteren Abfall einzufüllen oder aber die Deckeleinheit 2 wird automatisch durch ihre Eigengewicht in die Auswurfstellung verschwenkt, die in Fig. 3c dargestellt ist. In der Auswurfstellung fällt der Abfall in den Abfallsammelbehälter beziehungsweise in eine in dem Abfallsammelbehälter angeordnete Mülltonne.

## Patentansprüche

1. Wiegeschleuse zum Wiegen von in die Wiegeschleuse eingefüllten Gütern, insbesondere für
Abfallsammelvorrichtungen, mit einem Gehäuse (1), das eine Einfüllöffnung und eine Auswurföffnung aufweist, einem ersten Deckel (2a), mit dem die Einfüllöffnung verschließbar ist, und Wiegemitteln (3, 4), mit denen die einfüllbaren Güter gewogen werden können,
**dadurch gekennzeichnet,**
**dass** die Wiegeschleuse einen zweiten Deckel (2b) umfasst, mit welchem die Auswurföffnung verschließbar ist, wobei der erste Deckel (2a) und der zweite Deckel (2b) fest miteinander verbunden sind und eine Deckeleinheit (2) bilden, die schwenkbar zu dem Gehäuse (1) ist, und dass die Wiegemittel (3, 4) an einer Innenseite der Deckeleinheit (2) an derselben angebracht sind.

2. Wiegeschleuse nach Anspruch 1, **dadurch gekennzeichnet, dass** die Innenseiten der Deckeleinheit (2) einen Zylindersektor begrenzen.

3. Wiegeschleuse nach Anspruch 1 oder 2, **dadurch gekennzeichnet, dass** die Wiegemittel (3, 4) an dem zweiten Deckel (2b) angebracht sind.

4. Wiegeschleuse nach einem der Ansprüche 1 bis 3, **dadurch gekennzeichnet, dass** die Wiegemittel (3, 4) zumindest eine Wiegezelle (4a) umfassen.

5. Wiegeschleuse nach einem der Ansprüche 1 bis 4, **dadurch gekennzeichnet, dass** die Wiegemittel (3, 4) zumindest eine Wiegeplatte (3) umfassen.

6. Wiegeschleuse nach Anspruch 4 oder 5, **dadurch gekennzeichnet, dass** die Wiegezelle (4a) zum Teil zwischen zumindest einer der Wiegeplatten (3b) und der Deckeleinheit (2) angeordnet ist.

7. Wiegeschleuse nach einem der Ansprüche 1 bis 6, **dadurch gekennzeichnet, dass** die Deckeleinheit (2) in eine Einfüllstellung verschwenkbar ist, in der die Einfüllöffnung freigegeben und die Auswurföffnung durch den zweiten Deckel (2b) verschlossen ist.

8. Wiegeschleuse nach einem der Ansprüche 1 bis 7, **dadurch gekennzeichnet, dass** die Deckeleinheit (2) in eine Wiegestellung verschwenkbar ist, in welcher die eingefüllten Güter abwiegbar sind und die Einfüllöffnung durch den ersten Deckel (2a) verschlossen ist.

9. Wiegeschleuse nach einem der Ansprüche 1 bis 8, **dadurch gekennzeichnet, dass** die Deckeleinheit (2) in eine Auswurfstellung verschwenkbar ist, in welcher die Einfüllöffnung verschlossen ist.

10. Wiegeschleuse nach Anspruch 8, **dadurch gekennzeichnet, dass** die Stellung der Deckeleinheit (2) in der Wiegestellung mit einem Verriegelungselement (7) verriegelbar ist.

11. Wiegeschleuse nach Anspruch 10, **dadurch gekennzeichnet, dass** das Verriegelungselement (7) von einem Elektromagneten betreibbar ist.

12. Wiegeschleuse nach einem der Ansprüche 8, 10 oder 11, **dadurch gekennzeichnet, dass** die Wiegeschleuse einen Sensor (6) hat, der die Wiegestellung der Deckeleinheit (2) erkennt.

13. Wiegeschleuse nach einem der Ansprüche 1 bis 12, **dadurch gekennzeichnet, dass** die Wiegeschleuse einen Rechner umfasst, der mit den Wiegemitteln (3, 4) verbunden ist.

14. Wiegeschleuse nach Anspruch 13, **dadurch gekennzeichnet, dass** die Wiegeschleuse zumindest ein Anzeigemittel umfasst, das mit dem Rechner verbunden ist.

15. Wiegeschleuse nach Anspruch 13 oder 14, **dadurch gekennzeichnet, dass** der Sensor (6) zur Erkennung der Wiegestellung zumindest mittelbar mit dem Wiegerechner verbunden ist.

16. Wiegeschleuse nach einem der Ansprüche 1 bis 15, **dadurch gekennzeichnet, dass** die Wiegeschleuse ein Kommunikationsmittel zur Übertragung von Wiegedaten oder anderen Informationen umfasst.

17. Wiegeschleuse nach einem der Ansprüche 1 bis 16, **dadurch gekennzeichnet, dass** die Wiegeschleuse ein Ident- und Kommunikationsmittel zur Übertragung von Ident- Wiegedaten oder anderen Informationen umfasst.
